(19) Europäisches Patentamt
European Patent Office
Office européen des brevets

(11) **EP 3 692 346 B1**

(12) **EUROPÄISCHE PATENTSCHRIFT**

(45) Veröffentlichungstag und Bekanntmachung des Hinweises auf die Patenterteilung:
**05.07.2023 Patentblatt 2023/27**

(21) Anmeldenummer: **18782937.9**

(22) Anmeldetag: **01.10.2018**

(51) Internationale Patentklassifikation (IPC):
**G01J 3/46** (2006.01)   **G01J 3/02** (2006.01)
**A45D 44/00** (2006.01)

(52) Gemeinsame Patentklassifikation (CPC):
**G01J 3/0264; G01J 3/462; G01J 3/463;**
**A45D 44/005**

(86) Internationale Anmeldenummer:
**PCT/EP2018/076637**

(87) Internationale Veröffentlichungsnummer:
**WO 2019/068636 (11.04.2019 Gazette 2019/15)**

(54) **VERFAHREN ZUM ERMITTELN EINER HERSTELLERÜBERGREIFENDEN HAARFÄRBEMITTELEMPFEHLUNG**

METHOD FOR DETERMINING A CROSS-MANUFACTURER HAIR DYE RECOMMENDATION

PROCÉDÉ DESTINÉ À CALCULER UNE SUGGESTION DE TEINTURE CAPILLAIRE DÉPASSANT LE FABRICANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.10.2017 DE 102017217731**

(43) Veröffentlichungstag der Anmeldung:
**12.08.2020 Patentblatt 2020/33**

(73) Patentinhaber: **Henkel AG & Co. KGaA**
**40589 Düsseldorf (DE)**

(72) Erfinder:
• **KNUEBEL, Hans Georg**
  **40219 Düsseldorf (DE)**
• **KOENEN, Annika**
  **41516 Grevenbroich (DE)**
• **BONNIN, Lucile**
  **40215 Düsseldorf (DE)**

(56) Entgegenhaltungen:
**DE-A1-102015 225 459    US-A1- 2017 270 679**
**US-B1- 6 330 341**

EP 3 692 346 B1

**Beschreibung**

Die Erfindung betrifft ein Verfahren und Datenverarbeitungsvorrichtung zum Ermitteln einer herstellerübergreifenden Haarfärbemittelempfehlung.

App- oder Internet-basierte Produktempfehlungen sind für viele Produkte heutzutage Standard, stellen aber für ein Produktsegment der Haarcolorationen (auch als Haarfärbemittel bezeichnet) eine besondere Herausforderung dar. Denn ein Haarfärbeergebnis ist ein Resultat einer komplexen Wechselwirkung einer individuellen Eigenhaarfarbe (auch als Ausgangshaarfarbe oder Grundhaarfarbe bezeichnet) mit dem Haarfärbemittel, was eine Vielzahl von Farbresultaten ermöglicht.

Eine individualisierte Darstellung all dieser Farbresultate für einen Nutzer ist deshalb von hoher Bedeutung. Für den Handel und den Nutzer kann es dabei ferner wichtig sein, dass dem Nutzer eine herstellerübergreifende Produktempfehlung bereitgestellt wird, um den Nutzer nicht mit einer Vielzahl von Apps oder Internetseiten zu belasten, wobei darüber hinaus eine Vergleichbarkeit von Ergebnissen, die mittels unterschiedlicher Apps/Internetseiten erzielt würden, ohnehin fraglich wäre.

In verschiedenen Ausführungsbeispielen wird ein Verfahren bereitgestellt, welches es ermöglicht, eine herstellerübergreifende Haarfärbemittelempfehlung bereitzustellen.

Dabei kann, basierend auf einer Nutzer-Ausgangshaarfarbe und auf einer Wunschhaarfarbe des Nutzers, ein erstes empfohlenes Haarfärbemittel ermittelt werden, welches geeignet ist, beim Färben der Haare des Nutzers die Wunschhaarfarbe zu erzeugen oder ihr möglichst nahe zu kommen.

Zum Ermitteln des ersten empfohlenen Haarfärbemittels kann in verschiedenen Ausführungsbeispielen ein herkömmliches Verfahren genutzt werden, beispielsweise ein Verfahren unter Verwendung von Prädiktiver Analytik, beispielsweise wie in WO 2017/103050 A1 beschrieben und unten kurz erläutert. Weiterer Stand der Technik ist bekannt aus DE102015225459 A1, US6330341 B1 und US2017/270679 A1.

Für die Anwendung des Prädiktive-Analytik-Verfahrens kann es nötig sein, eine Zusammensetzung der verfügbaren Haarfärbemittel hinsichtlich ihrer Farbstoffvorstufen zu kennen. Deshalb kommen für das erste empfohlene Haarfärbemittel nur solche in Frage, für welche die Zusammensetzung bekannt ist. Typischerweise ist eine genaue Zusammensetzung eines Haarfärbemittels nur dem Hersteller selbst bekannt, so dass das erste empfohlene Haarfärbemittel typischerweise von einem ersten Hersteller stammt.

Um ein zweites Haarfärbemittel von einem zweiten Hersteller empfehlen zu können, für welches ein ähnliches Haarfärbeergebnis wie für das erste empfohlene Haarfärbemittel zu erwarten ist, kann in verschiedenen Ausführungsbeispielen zunächst (beispielsweise vorab im Labor) ein so genannter Matching-Prozess (auch als Zuordnungsprozess, Zuordnung oder Zuordnen bezeichnet) ausgeführt werden, welcher dazu dient, jedem verfügbaren Haarfärbemittel, für welches die Zusammensetzung unbekannt ist (typischerweise also Haarfärbemittel von anderen Herstellern als dem ersten Hersteller), ein Haarfärbemittel zuzuordnen, für welches die Zusammensetzung bekannt ist.

Für das Zuordnen kann jedes der Haarfärbemittel, also sowohl diejenigen mit bekannter Zusammensetzung als auch diejenigen mit unbekannter Zusammensetzung, auf einer Haarprobe ausgefärbt werden.

Die jeweilige Haarprobe, an welcher die Färbung ausgeführt wird, kann eine Standard-Ausgangshaarfarbe aus einer Mehrzahl von Standard-Ausgangshaarfarben aufweisen. Dabei kann die Standard-Ausgangshaarfarbe für das Färben mit dem Haarfärbemittel jeweils anhand eines so genannten "mittleren Anwendungsbereichs" zugewiesen werden. Der mittlere Anwendungsbereich ist eine branchenübliche Angabe, welche typischerweise zusammen mit dem Haarfärbemittel bereitgestellt wird und angibt, für welche Ausgangshaarfarben das Haarfärbemittel geeignet ist.

In verschiedenen Ausführungsbeispielen kann die Mehrzahl von Standard-Ausgangshaarfarben zwei, drei, vier oder fünf Standard-Ausgangshaarfarben aufweisen. Nur eine Standard-Ausgangshaarfarbe würde bedeuten, dass zu unterschiedliche Standard-Ausgangshaarfarben zu einer Gruppe zusammengefasst werden müssten, und ein Verwenden von zu vielen Standard-Ausgangshaarfarben könnte dazu führen, dass zu wenige Haarfärbemittel einer jeweiligen Standard-Ausgangshaarfarbe zugeordnet werden, um ein gutes Matching der Färbemittel zu erreichen.

Bei einem Verwenden von zwischen zwei und fünf Standard-Ausgangshaarfarben kann somit erreicht werden, dass die unterschiedlichen "mittleren Anwendungsbereiche" hinreichend fein abgestuft abbildbar sind. Außerdem kann jeder der Standard-Ausgangshaarfarben sowohl eine Mehrzahl der Haarfärbemittel mit bekannter Zusammensetzung als auch eine Mehrzahl der Haarfärbemittel mit unbekannter Zusammensetzung zugeordnet werden, so dass bei einem Standard-Ausgangshaarfarbenspezifischen Zuordnen des jeweiligen Haarfärbemittels mit unbekannter Zusammensetzung zu einem der Haarfärbemittel mit bekannter Zusammensetzung ein kleiner Farbabstand erzielt wird.

Die ermittelte Zuordnung der Haarfärbemittel mit unbekannter Zusammensetzung zu den Haarfärbemitteln mit bekannter Zusammensetzung kann in verschiedenen Ausführungsbeispielen in einer Datenbank gespeichert werden.

Das zweite empfohlene Haarfärbemittel kann unter Verwendung der ermittelten Zuordnung der Haarfärbemittel mit unbekannter Zusammensetzung zu den Haarfärbemitteln mit bekannter Zusammensetzung ermittelt werden, beispielsweise unter Zuhilfenahme der Datenbank. Dabei kann das zweite empfohlene Haarfärbemittel dasjenige Haarfärbemittel sein, welches dem ersten empfohlenen Haarfärbemittel zugeordnet ist.

In verschiedenen Ausführungsbeispielen kann ferner ein drittes, viertes (...) empfohlenes Haarfärbemittel ermittelt werden. Dafür kann im Wesentlichen vorgegangen werden wie beim Ermitteln des zweiten empfohlenen Haarfärbemittels. Im Unterschied dazu kann jedoch das weitere empfohlene Haarfärbemittel nicht dem ersten empfohlenen Haarfärbemittel zugeordnet sein, sondern demjenigen Haarfärbemittel mit bekannter Zusammensetzung, welches den zweitkleinsten, drittkleinsten, (...) Farbabstand zur Wunschfarbe erzeugt.

In verschiedenen Ausführungsbeispielen kann das Verfahren integraler Bestandteil einer elektronischen Kundenberatung sein, welche an einem Verkaufsort derart ausführbar sein kann, dass spezifische Informationen des Verkaufsorts, beispielsweise eine allgemeine Produktpalette des Händlers und/oder eine gegenwärtige Verfügbarkeit in die Produktempfehlung einbezogen werden.

Gemäß einem Ausführungsbeispiel kann das Verfahren, z.B. eine Software, eingerichtet sein, dem Nutzer nur diejenigen von den geeigneten Produkten zu präsentieren, welche gegenwärtig am Verkaufsort prinzipiell verfügbar, z.B. lagerhaltig sind. Dafür kann die Software eine Verfügbarkeitsinformation (z.B. Lagerinformation) verwenden, die sich auf den Verkaufsort (Pointof-Sale, PoS) bezieht, an welchem sich der Nutzer gegenwärtig befindet. Die Verkaufsortinformation kann in verschiedenen Ausführungsbeispielen beispielsweise mittels eines NFC Chips, einer URL, einer Spracheingabe oder ähnlichem bereitgestellt werden, welche in verschiedenen Ausführungsbeispielen außerdem als Aktivierungssignal für die Software dienen können.

Die Verkaufsortinformation kann beispielsweise einen Namen des Ladens und/oder eine Adresse des Ladens aufweisen. Anhand der Verkaufsortinformation können Rückschlüsse auf die Produkte, welche an diesem Verkaufsort verfügbar sind, gezogen werden. Die Verfügbarkeitsinformation kann in verschiedenen Ausführungsbeispielen vom Betreiber des Ladens bereitgestellt und beispielsweise in der Datenbank oder einer weiteren Datenbank gespeichert sein oder werden.

Damit kann es dem Nutzer ermöglicht sein, nicht nur herstellerübergreifend eine Produktempfehlung zu erhalten, welches Haarfärbemittel geeignet ist, seine Wunschhaarfarbe basierend auf seiner Ausgangshaarfarbe zu erzielen, sondern außerdem auch sicherzustellen, dass das empfohlene Produkt tatsächlich am Verkaufsort verfügbar, oder alternativ beispielsweise zumindest dort bestellbar ist.

Dafür kann in verschiedenen Ausführungsbeispielen vor einem (z.B. erneuten) Ausführen des Matching-Prozesses ein Filtern ausgeführt werden, wobei nur diejenigen Haarfärbemittel für das Zuordnen der Haarfärbemittel, für welche die Zusammensetzung unbekannt ist, zu den Haarfärbemitteln, für welche die Zusammensetzung bekannt ist, verwendet werden, welche ein vorgegebenes Filterkriterium erfüllen.

Alternativ oder zusätzlich kann beim Zuordnen (Matching) zusätzlich zur Zuordnung mit dem kleinsten Farbabstand zwischen den Färbemitteln eine Information darüber gespeichert werden (z.B. in der Datenbank), welche Zuordnung (als zweitbeste) den nächstgrößeren Farbabstand ergäbe, usw. Damit kann ermöglicht sein, das Filtern an der Datenbank nach dem Zuordnen auszuführen und bei Wegfall des zugeordneten Haarfärbemittels das zweitbeste zugeordnete Haarfärbemittel als das zweite empfohlene Haarfärbemittel zu empfehlen.

Abgesehen von einer Verfügbarkeit können weitere Kriterien für den Nutzer bei einer Auswahl eines Haarfärbemittels relevant sein und in den Empfehlungsvorgang (z.B. als Filter) einbezogen werden, beispielswese eine Waschechtheit, eine Lichtechtheit, eine Fähigkeit zur Grauabdeckung, ein Freisein von bestimmten Inhaltsstoffen (z.B. Allergenen), ein Hersteller usw.

Dem Nutzer können die empfohlenen Haarfärbemittel beispielsweise optisch und/oder akustisch präsentiert werden.

In verschiedenen Ausführungsbeispielen kann dem Nutzer vor oder nach dem Präsentieren der Haarfärbemittel, die ein Erreichen seines Wunschergebnisses ermöglichen oder diesem nahekommen, eine Simulation eines erwarteten Ergebnisses angezeigt werden.

Dafür kann in verschiedenen Ausführungsbeispielen eine neutralfarbige Haartresse (oder ein Digitalfoto davon) neu eingefärbt mit dem ermittelten Haarfärbeergebnis angezeigt werden.

In verschiedenen Ausführungsbeispielen kann alternativ oder zusätzlich ein Foto des Nutzers verwendet werden, welches beispielsweise mittels einer Kamera der tragbaren Datenverarbeitungsvorrichtung aufgenommen werden oder worden sein kann, oder ein Foto, welches der tragbaren Datenverarbeitungsvorrichtung bereitgestellt wird, z.B. als übermittelte Datei.

Die tragbare Datenverarbeitungsvorrichtung kann eingerichtet sein, beispielsweise mittels der Software oder mittels einer weiteren Software, in dem Foto einen Haardarstellungsbereich, in welchem Haare des Nutzers dargestellt sind, zu ermitteln, und diesen Bereich derart verändert darzustellen, dass sich eine simulierte Darstellung des Nutzers nach der Anwendung des jeweiligen Kosmetikprodukts ergibt. Dieser Vorgang kann auf im Prinzip bekannte Weise ausgeführt werden. Beispielsweise ist ein solches Verfahren zum simulierten Darstellen neu eingefärbter Haare in einem Digitalfoto eines Nutzers bekannt.

Ausführungsbeispiele der Erfindung sind in den Figuren dargestellt und werden im Folgenden näher erläutert.

Es zeigen

Figur 1 eine schematische Darstellung eines Verfahrens zum Ermitteln einer herstellerübergreifenden Haarfärbemittelempfehlung gemäß verschiedenen Ausführungsbeispielen;

Figur 2 eine beispielhafte Präsentation eines Färbeergebnisses unter Verwendung eines gemäß verschiedenen Ausführungsbeispielen ermittelten empfohlenen Haarfärbemittels; und

Figur 3 ein Ablaufdiagramm eines Verfahrens zum Ermitteln einer herstellerübergreifenden Haarfärbemittelempfehlung gemäß verschiedenen Ausführungsbeispielen.

In der folgenden ausführlichen Beschreibung wird auf die beigefügten Zeichnungen Bezug genommen, die Teil der vorliegenden Anmeldung bilden und in denen zur Veranschaulichung spezifische Ausführungsformen gezeigt sind, in denen die Erfindung ausgeübt werden kann. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

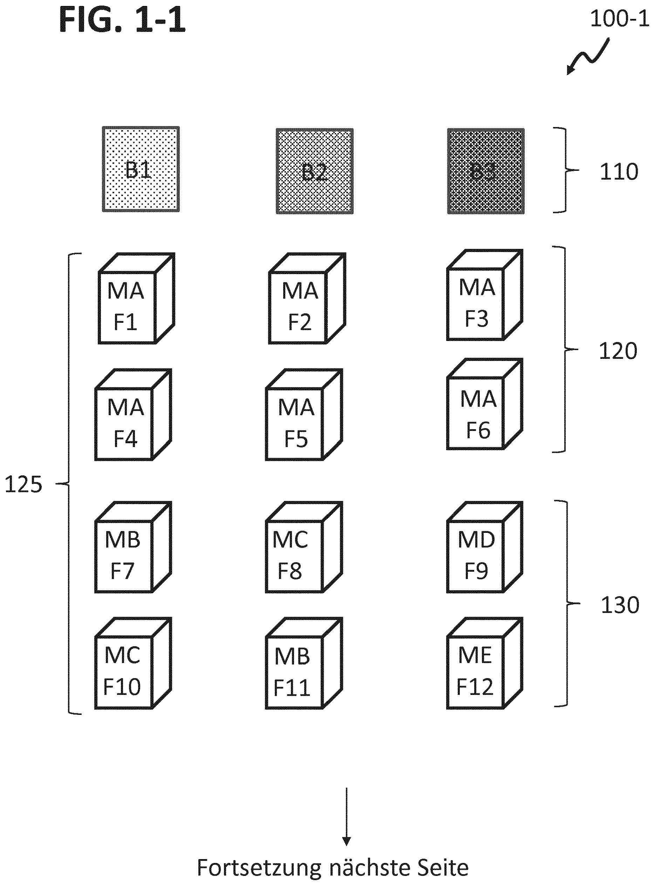

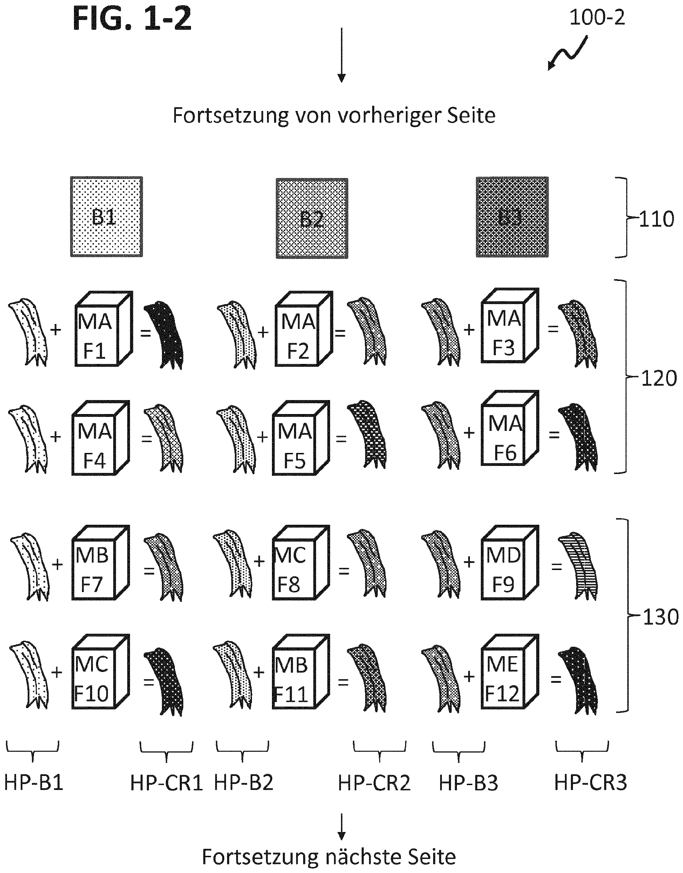

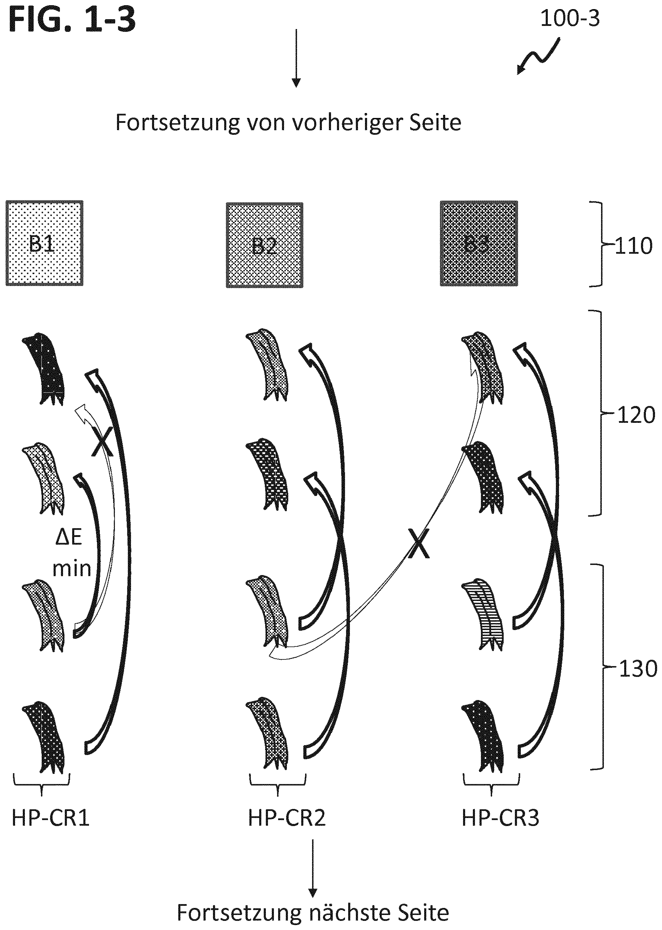

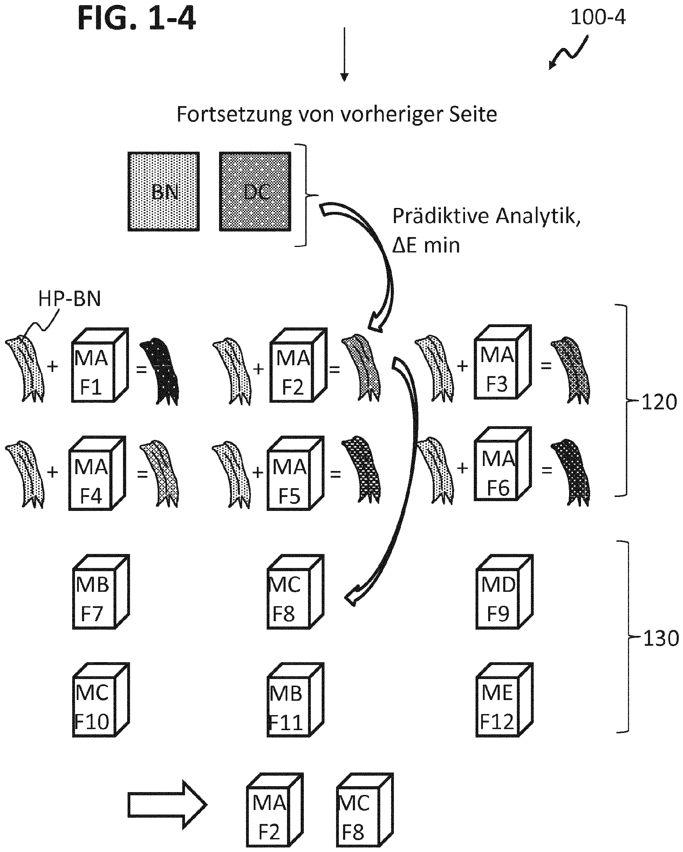

Figur 1 zeigt auf vier Seiten eine schematische Darstellung 100 (aufgeteilt in 100-1 bis 100-4) eines Verfahrens zum Ermitteln einer herstellerübergreifenden Haarfärbemittelempfehlung gemäß verschiedenen Ausführungsbeispielen.

Wie in 100-1 dargestellt ist, kann eine Mehrzahl von Haarfärbemitteln 125 eine Mehrzahl von Haarfärbemitteln mit bekannter Zusammensetzung 120 (wobei die unterschiedlichen Zusammensetzungen beispielhaft mit F1 bis F6 beschriftet sind) und eine Mehrzahl von Haarfärbemitteln mit unbekannter Zusammensetzung 130 (welche beispielhaft mit F7 bis F12 beschriftet sind) aufweisen.

In FIG. 1 sind beispielhaft die Haarfärbemittel mit bekannter Zusammensetzung 120 als von einem ersten Hersteller MA hergestellt gekennzeichnet, und die Haarfärbemittel mit unbekannter Zusammensetzung 130 als von unterschiedlichen anderen Herstellern MB, MC, MD und ME hergestellt gekennzeichnet. Dies dient allerdings nur der Veranschaulichung. In verschiedenen Ausführungsbeispielen kann die Zusammensetzung der Haarfärbemittel von mehr als einem Hersteller bekannt sein, und/oder die Zusammensetzung für weniger oder mehr als vier andere Hersteller unbekannt sein.

Haarfärbemittel können eine Mischung aus verschiedenen Farbstoffvorstufen aufweisen. Während eines Färbevorgangs kann sich eine Vielzahl von verschiedenen Farbstoffen bilden, deren Eigenschaften als Reinsubstanzen möglicherweise nicht bekannt sind.

Ferner können Konzentrationen der Farbstoffe in den gefärbten Haaren unbekannt sein, und es kann auch unbekannt sein, welche Konzentration der Farbstoffe in den gefärbten Haaren welcher Konzentration von Farbstoffvorstufen im Haarfärbemittel entspricht. Dies kann zumindest teilweise daran liegen, dass die Farbstoffvorstufen bei der Bildung der verschiedenen Farbstoffe miteinander wechselwirken.

Ohne die Zusammensetzung eines Haarfärbemittels zu kennen, kann es deshalb schwierig oder unmöglich sein vorherzusagen, welche Haarfarbe sich beim Färben von Haaren, welche eine bestimmte Ausgangsfarbe aufweisen, ergeben wird.

Um dennoch für jedes Haarfärbemittel mit bekannter Zusammensetzung 120 (beispielsweise vom Hersteller MA) mindestens ein weiteres Haarfärbemittel unbekannter Zusammensetzung 130 (beispielsweise von einem der Hersteller MB, MC, MD und/oder ME) empfehlen zu können, kann zunächst eine in 100-1 und 100-2 dargestellte Zuordnung der Haarfärbemittel unbekannter Zusammensetzung 130 zu den Haarfärbemitteln bekannter Zusammensetzung 120 vorgenommen werden.

Dafür kann eine Mehrzahl von unterschiedlichen Standard-Ausgangshaarfarben 110 definiert werden (beschriftet mit B1, B2 und B3). Wie oben beschrieben, ist bei Verwendung von zwei bis etwa fünf Standard-Ausgangshaarfarben 110 (hier beispielhaft drei) ein Zuordnungsergebnis mit kleinen Farbabständen zu erwarten, wobei ein Farbabstand als klein beurteilt werden kann, bei welchem ein Farbunterschied zwischen den zwei beabstandeten Farben als gering wahrgenommen würde ($\Delta E < 2{,}0$), nur für das geübte Auge bemerkbar wäre ($\Delta E < 1{,}0$) oder nahezu unmerklich wäre ($\Delta E < 0{,}5$).

In verschiedenen Ausführungsbeispielen kann ein Zuordnen der Haarfärbemittel 125 zu den Standard-Ausgangshaarfarben 110 derart erfolgen, dass jedes der Mehrzahl von Haarfärbemitteln 125 einer der Standard-Ausgangshaarfarben einer Mehrzahl von Standard-Ausgangshaarfarben 110 zugeordnet wird.

Für die Zuordnung der Haarfärbemittel 125 zu den Standard-Ausgangshaarfarben 110 kann in verschiedenen Ausführungsbeispielen ein mittlerer Anwendungsbereich herangezogen werden. Der mittlere Anwendungsbereich wird üblicherweise vom Hersteller im Zusammenhang mit einer Bedienungsanleitung des Haarfärbemittels bereitgestellt, beispielsweise als Aufdruck auf der Verpackung. Jedes der Haarfärbemittel 125 kann derjenigen Standard-Ausgangshaarfarbe 110 zugeordnet werden, welche dem mittleren Anwendungsbereich am nächsten liegt (z.B. den geringsten Farbabstand dazu aufweist).

Wie in 100-2 dargestellt ist, kann das Verfahren ferner ein Färben von Haarproben HP mit der Mehrzahl von Haarfärbemitteln 125 aufweisen, wobei jeweils eins der Haarfärbemittel 125 auf einer Haarprobe HP mit der zugeordneten Standard-Ausgangshaarfarbe 110 gefärbt wird, also z.B. das Haarfärbemittel mit der Zusammensetzung F1 auf der Haarprobe HP-B1 mit der Standard-Ausgangshaarfarbe B1, das Haarfärbemittel mit der Zusammensetzung F5 auf der Haarprobe HP-B2 mit der Standard-Ausgangshaarfarbe B2 und das Haarfärbemittel mit der Zusammensetzung F12 auf der Haarprobe HP-B3 mit der Standard-Ausgangshaarfarbe B3.

Daraus ergeben sich Haarfärbergebnisse (auch als Färbergebnisse oder (Haar-)Färberesultate bezeichnet), welche in 100-2 mit HP-CR1 bis HP-CR3 bezeichnet sind, und welche unterschiedliche Farben aufweisen können (beispielhaft mittels verschiedener Füllungen/Schraffuren angedeutet).

Mittels eines farbmetrischen Vermessens der Mehrzahl von Haarproben, welches auf im Wesentlichen auf bekannte Weise erfolgen kann, beispielsweise mittels eines Spektrometers, kann für jedes Färbergebnis die sich ergebende Haarfarbe ermittelt werden.

Unter einer "Farbe" kann hierin ein Zusammenwirken eines Farbtons (d.h. eines spektralen Farbeindrucks, auch als Buntton bezeichnet, was als das verstanden werden kann, was als die "eigentliche Farbe" angesehen wird), einer Farbintensität (d.h. wie intensiv die Farbe erscheint, z.B. verglichen mit einem neutralen Grau, was auch als Sättigung, Farbsättigung, Buntheit, Chromatizität, Chromazität oder Farbtiefe bezeichnet wird) und einer Helligkeit (d.h. wie hell oder dunkel die Farbe erscheint) verstanden werden.

In verschiedenen Ausführungsbeispielen kann die Farbinformation beispielsweise eine Parametrisierung in einem bekannten Farbraum aufweisen, beispielsweise in einem L*a*b*-Farbraum (wobei L* die Helligkeit einer Farbe angibt, a* den Grün- und Rotanteil und b* den Blau- und Gelbanteil der Farbe; mitunter wird hierin auch als verkürzende Schreibweise Lab oder einzeln L, a, oder b verwendet) in einem RGB-Farbraum durch Farbanteile in Rot, Grün und Blau, in einem CMYK-Farbraum durch Farbanteile in Cyan, Magenta, Gelb und Schwarz, oder in einem beliebigen anderen Farbraum.

In verschiedenen Ausführungsbeispielen kann ein Farbraum, dem die Farbinformation (z.B. die Haarfarbinformation des gefärbten Haars oder des Haars vor der Färbung, was auch als Grundhaarfarbe bezeichnet wird) entstammt, oder in welchem die Farbinformation dargestellt wird (beispielsweise wenn eine Haarfarbe dargestellt wird, siehe unten) so beschaffen sein, dass eine ermittelte oder dargestellte Farbe unabhängig von einem Medium ist, durch welches die Farbe ermittelt oder dargestellt wird (z.B. Farbmessgerät, Bildschirm, Drucker, Scanner, menschliches Auge, usw.). Der Farbraum kann beispielsweise ein L*a*b*-Farbraum sein, die Farbinformation ein beispielsweise mittels a* und b* parametrisierter Farbton. Die einheitliche Darstellung in dem mediumunabhängigen Farbraum kann es beispielsweise ermöglichen, ein realitätsnahes zu erwartendes Färbergebnis zu präsentieren, beispielsweise indem eine mittels Färbens erzielte Farbe beim Betrachter des gefärbten Haars denselben Farbeindruck hinterlässt wie in einer Darstellung des zu erwartenden Ergebnisses, beispielsweise als ein Verpackungsaufdruck, eine Anzeige an einem Computerbildschirm, o.ä.

Alternativ zum L*a*b*-Farbraum kann ein anderer geeigneter Farbraum verwendet werden, z.B. CIELab oder ähnliches.

Der Farbabstand ΔE kann auf bekannte Weise ermittelt werden, beispielsweise als euklidischer Abstand, z.B. in Form einer Euklidischen Distanzmatrix der (L*, a*, b*)-Vektoren aller Haarfarben, die auf derselben Standard-Ausgangshaarfarbe 110 erzielt wurden. Alternativ können andere geeignete Formeln zum Berechnen des Farbabstands genutzt werden, beispielsweise $\Delta E_{94}$ nach CIE94 oder $\Delta E_{00}$ nach CIEDE2000.

Das Ermitteln des Farbabstands kann in verschiedenen Ausführungsbeispielen getrennt für jede Standard-Ausgangshaarfarbe 110 erfolgen (was dadurch veranschaulicht ist, dass die Zuordnung der dritten HP-CR2-Farbe zur ersten HP-CR3-Farbe mittels Durchkreuzens als ungültig gekennzeichnet ist). Das heißt, dass ein Ermitteln des Farbabstands zwischen jeder der Mehrzahl von Farben, die mittels der Haarfärbemittel mit der unbekannten Zusammensetzung 130 auf einer der Standard-Ausgangshaarfarben 110 gefärbt wurden, und jeder der Farben, die mittels der Mehrzahl von Haarfärbemitteln bekannter Zusammensetzung 120 auf derselben Standard-Ausgangshaarfarben 110 gefärbt wurden, berechnet wird.

Wie in 100-3 dargestellt ist kann das Verfahren ferner ein Zuordnen jedes der Haarfärbemittel mit der unbekannten Zusammensetzung 130 zu einem der Haarfärbemittel mit der bekannten Zusammensetzung 120 aufweisen, und zwar derart, dass der Farbabstand ΔE für die einander zugeordneten Haarfärbemittel minimiert ist.

Zur Veranschaulichung des Kriteriums der Farbabstandsminimierung ist in 100-3 die (als Pfeile gekennzeichnete) Zuordnung für die gefärbten Haarproben HP-CR1, HP-CR2 und HP-CR3 anstelle der jeweiligen Haarfärbemittel 125 dargestellt. Dabei sollen Schraffuren ähnlicher Dichte ähnliche Farben repräsentieren, und somit die gefärbten Haarproben HP-CR mit ähnlicher Schraffurdichte einen relativ kleinen Farbabstand aufweisen. Wie für die Färbergebnisse HP-CR1 veranschaulicht ist, wird somit das Haarfärbemittel mit der unbekannten Zusammensetzung 130 aus der dritten Zeile zur Minimierung des Farbabstands nicht dem Haarfärbemittel mit der bekannten Zusammensetzung 120 aus der ersten Zeile zugeordnet (Pfeil ist durchgekreuzt), sondern dem Haarfärbemittel mit der bekannten Zusammensetzung 120 aus der zweiten Zeile.

Zum Ermitteln eines ersten empfohlenen Haarfärbemittels kann in verschiedenen Ausführungsbeispielen, wie in 100-4 dargestellt, das Verfahren ein Ermitteln einer Nutzer-Ausgangshaarfarbe BN aufweisen.

Die Nutzer-Ausgangshaarfarbe BN kann beispielsweise ausgewählt werden (z.B. mittels Antippens eines berührungsempfindlichen Bildschirms, mittels einer Tastatur, einer Maus, einer Spracheingabe oder ähnlichem) aus einer präsentierten Mehrzahl von möglichen Ausgangshaarfarben.

In verschiedenen Ausführungsbeispielen kann die Nutzer-Ausgangshaarfarbe BN mittels einer Messvorrichtung ermittelt werden, beispielsweise mittels eines Spektrometers, einer Kamera, eines Colorimeters, eines Photometers oder eines anderen geeigneten Geräts.

Das Verfahren kann ferner ein Ermitteln einer Wunschhaarfarbe des Nutzers DC aufweisen, beispielsweise mittels eines Auswahlmenüs, z.B. wie oben für die Nutzer-Ausgangshaarfarbe BN beschrieben.

In verschiedenen Ausführungsbeispielen können auf im Wesentlichen bekannte Weise, z.B. wie in WO 2017/103050 A1 beschrieben, Methoden aus dem Feld der prädiktiven Analytik, für welche üblicherweise der entsprechende englische Begriff "Predictive Analytics" verwendet wird (auch bekannt als "Big Data" (sinngemäß übersetzt "große Datenmenge"), "Data Mining" (übersetzt "Auswertung großer Datenmengen") oder "Machine Learning" (übersetzt "Maschinenlernen")), genutzt werden, um trotz möglicherweise vieler Unbekannter in einer Färbemischung präzise Berechnungen eines Haarfärbeergebnisses zu ermöglichen.

Es ist gemäß verschiedenen Ausführungsbeispielen möglich, mittels Testfärbungen einen Datensatz (auch als Haarfarben-Daten bezeichnet) bereitzustellen, welcher für jede der Testfärbungen zumindest die Ausgangshaarfarbe und die Färbemittelzusammensetzung als Färbevoraussetzungsparameter aufweist, und zumindest die (in einem Farbraum parametrisierte) Haarfarbe nach dem Färben als Färbeergebnisparameter aufweist.

Der Färbeergebnisparameter kann in verschiedenen Ausführungsbeispielen ferner weitere Eigenschaften der gefärbten Haarfarbe aufweisen, beispielsweise eine Lichtechtheit, eine Waschechtheit oder eine Fähigkeit zur Grauabdeckung.

Der Datensatz kann gemäß verschiedenen Ausführungsbeispielen als Grundlage für eine Anwendung eines Prädiktive-Analytik Verfahrens genutzt werden.

Beispielsweise können die Färbevoraussetzungsparameter oder ein Teil der Färbevoraussetzungsparameter und die ihnen zugeordneten Färbeergebnisparameter oder ein Teil der Färbeergebnisparameter genutzt werden, um ein Modell zu erzeugen, welches den Datensatz möglichst genau beschreibt.

In verschiedenen Ausführungsbeispielen kann es sich bei den Messdaten des Datensatzes, d.h. den gemessenen Angaben der Haarfarben-Daten, die Eigenschaften der mittels Färbens erzeugten Haarfarbe beschreiben (z.B. L*, a*, b* für die Farbe, eine Waschechtheit, Lichtechtheit, Grauabdeckung o.ä.), um abhängige Variablen handeln. Mittels eines komplexen mathematischen Modells, welches mittels des Prädiktive-Analytik-Verfahrens gefunden werden kann, kann die Abhängigkeit der abhängigen Variablen von den unabhängigen Variablen (beispielsweise den Konzentrationen der Farbstoffvorstufen, beispielsweise den Konzentrationen, wie sie auf dem Kopf ("on head") vorliegen) modelliert werden. Das heißt, mittels des Prädiktive-Analytik-Verfahrens kann eine Beziehung zwischen den unabhängigen und den abhängigen Variablen (anders ausgedrückt zwischen den Färbevoraussetzungsparametern und den Färbeergebnisparametern) ermittelt werden. Für die Farbe kann dies beispielsweise ausgedrückt werden als:

$$L*a*b* = f(c_1, c_2, c_3, \ldots, c_n),$$

wobei L*a*b* für die Farbparameter steht, $c_i$ (i=1,...,n, n>1) für Konzentrationen von Farbstoffvorstufen. Dabei kann die Funktion analytisch bekannt sein oder auch nicht. Falls keine analytische Funktion bekannt ist, können die Werte der abhängigen Variablen (der Färbeergebnisparameter) auch mittels numerischer Algorithmen berechnet werden.

Unter Verwendung des mittels Prädiktiver Analytik erzeugten Modells kann in verschiedenen Ausführungsbeispielen das Haarfärbemittel ermittelt werden, welches bei Färben von Haar mit der Nutzer-Ausgangshaarfarbe BN zu einem Haarfärbeergebnis führt, welches den geringsten Farbabstand zur Wunschhaarfarbe DC des Nutzers aufweist.

In 100-4 der FIG. 1 ist veranschaulicht, dass für die Nutzer-Ausgangshaarfarbe BN und die Wunschhaarfarbe DC das Prädiktive-Analytik-Modell für das Haarfärbemittel mit bekannter Zusammensetzung F2, welches eine bekannte Zusammensetzung aufweist, der Farbabstand ∆E minimiert ist.

Dementsprechend ist im Beispiel in 100-4 F2 von Hersteller MA das erste empfohlene Haarfärbemittel.

In verschiedenen Ausführungsbeispielen kann das Verfahren ferner ein Ermitteln eines zweiten empfohlenen Haarfärbemittels aufweisen, wobei das zweite empfohlene Haarfärbemittel das dem ersten empfohlenen Haarfärbemittel zugeordnete Haarfärbemittel unbekannter Zusammensetzung 130 ist

Das dem ersten empfohlenen Haarfärbemittel F2 zugeordnete Haarfärbemittel im Beispiel in 100-4 ist F8 des Herstellers MC. Somit ist F8 das zweite empfohlene Haarfärbemittel.

Als herstellerübergreifende Haarfärbemittelempfehlung zum Erzielen einer Wunschhaarfarbe können dem Nutzer somit die Haarfärbemittel F2 und F8 empfohlen werden.

In verschiedenen Ausführungsbeispielen können dem Nutzer ferner weitere Haarfärbemittel empfohlen werden, beispielsweise wie oben beschrieben unter Angabe derjenigen Haarfärbemittel, welche den nächstgrößeren Farbabstand aufweisen (nicht dargestellt).

Ferner können, wie oben beschrieben, weitere Kriterien berücksichtigt werden, die vom Nutzer vorgegeben sein können, z.B. dass das Haarfärbemittel frei sein soll von Inhaltsstoffen, auf welche der Nutzer allergisch reagiert (eine Information, die möglicherweise auch für die Färbemittel mit unbekannter Zusammensetzung 130 verfügbar sein kann, z.B. als Angabe "frei von ..." auf der Verpackung), eine Waschechtheit, usw.

Die zusätzlichen Kriterien können vom Nutzer beispielsweise als Antworten in einem Fragebogen bereitgestellt werden.

Das Verfahren kann in verschiedenen Ausführungsbeispielen mittels einer elektronischen Datenverarbeitungsvorrichtung ausgeführt werden, welche zum Ausführen des Verfahrens eingerichtet ist.

Die Datenverarbeitungsvorrichtung kann in verschiedenen Ausführungsbeispielen eine tragbare Datenverarbeitungsvorrichtung sein, z.B. ein Smartphone, ein Tablet, ein iPad, ein Laptop oder ein Phablet/Smartlet. Alternativ dazu kann auch beispielsweise ein stationärer Computer genutzt werden.

Zum Ausführen des Verfahrens kann eine Software bereitgestellt sein, beispielsweise ein Computerprogramm, insbesondere eine App.

Unter einer "App" wird im Rahmen dieser Anmeldung ein Computerprogramm bezeichnet, das genutzt wird, um eine nicht systemtechnische Funktionalität zu bearbeiten oder zu unterstützen. Der Begriff "App" umfasst insbesondere Anwendungssoftware für smarte Endgeräte wie Smartphones und Tablets ("mobile App") als auch Desktop-Anwendungssoftware. Die App kann eine native App sein, die nur auf einer Plattform funktioniert, oder eine plattformunabhängige Web-, Hybrid- oder Cross-Plattform-App.

Die App kann beispielsweise über eine in das jeweilige Betriebssystem des smarten Endgeräts integrierte Internet-Vertriebsplattform heruntergeladen werden. Im Fall eines smarten Endgeräts mit dem Betriebssystem "Apple iOS" kann dies beispielsweise der "App Store" sein oder im Fall eines smarten Endgeräts mit dem Betriebssystem "Android" kann dies der "Google Play Store" sein.

In verschiedenen Ausführungsbeispielen kann eine Webseite eingerichtet sein, zumindest einen Teil des Verfahrens, z.B. das Ermitteln des ersten empfohlenen Haarfärbemittels, auf einer weiteren (z.B. externen) Datenverarbeitungsvorrichtung ausführen zu lassen. Dies kann insbesondere in einem Fall vorteilhaft sein, dass die elektronische Datenverarbeitungsvorrichtung ein relativ geringes Leistungsvermögen aufweist, z.B. bei Verwendung eines Smartphones, Tablets usw. Außerdem kann die Aktualisierung/Wartung einer extern gespeicherten Datenbank, welche beispielsweise die Zuordnung der Haarfärbemittel mit unbekannter Zusammensetzung zu den Haarfärbemitteln mit bekannter Zusammensetzung umfasst, vereinfacht ist. Beispielsweise können bei einer extern gespeicherten Datenbank, z.B. einer zentral verwalteten Datenbank, leicht nachträglich Informationen ergänzt werden, beispielsweise neue Produkte, neue Versuchsergebnisse zu vorhandenen Produkten, usw.

Die Webseite kann beispielsweise in einem Webbrowser geöffnet werden, welcher auf der tragbaren Datenverarbeitungsvorrichtung installiert ist.

In verschiedenen Ausführungsbeispielen kann die Datenverarbeitungsvorrichtung einen berührungsempfindlichen Bildschirm aufweisen, welcher beispielsweise zum Erfassen einer Wunschhaarfarbe und/oder zum Darstellen des erwarteten Färbeergebnisses genutzt werden kann.

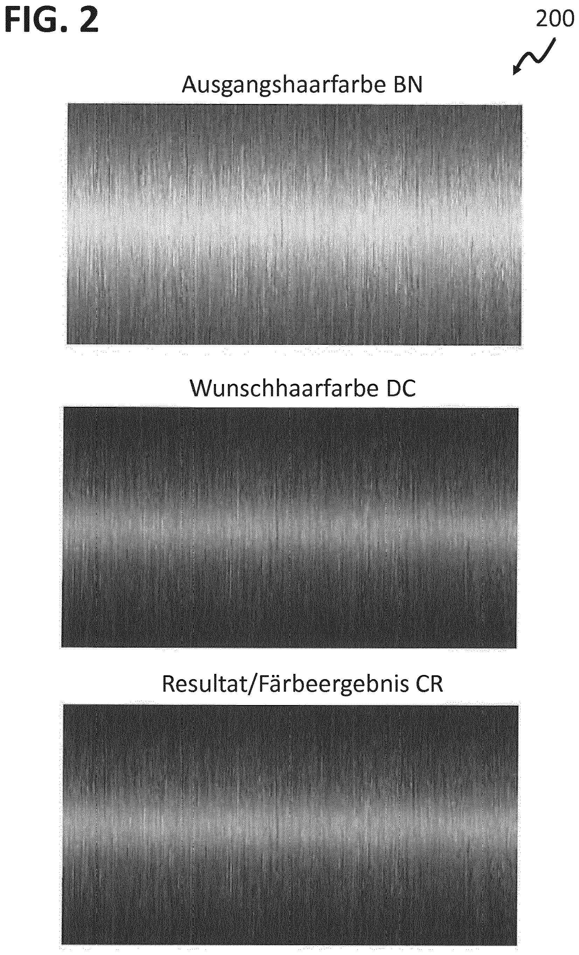

FIG. 2 zeigt eine beispielhafte Präsentation 200 des Färbeergebnisses CR unter Verwendung eines gemäß verschiedenen Ausführungsbeispielen ermittelten empfohlenen Haarfärbemittels.

Eine Übermittlung von Färbeergebnissen als farbmetrische L*a*b*-Werte kann zwar präzise sein, ist allerdings völlig unanschaulich und daher für eine Beurteilung durch einen Nutzer ungeeignet.

Auch eine Umrechnung der L*a*b*-Werte in RGB-Werte ist möglicherweise wenig intuitiv und kann dem Nutzer nur ein vages Gefühl für das Färbeergebnis vermitteln.

Besser geeignet kann daher eine Einfärbung einer neutralfarbigen Haartresse (oder einer z.B. digitalen Abbildung davon) mit Ausgangs- und Zielfarben sein.

Entsprechend zeigt FIG. 2 das Haarfärbeergebnis als gefärbte Haartresse, wobei hier beispielhaft auch die Ausgangshaarfarbe BN und die Wunschhaarfarbe DC als entsprechend gefärbte Haartressen angezeigt werden.

Auch wenn ein Beurteilen des Farbabstands zwischen der Wunschhaarfarbe DC und dem prognostizierten Färbeergebnis CR nur in der Farbabbildung möglich sind, kann auch eine schwarz-weiß-Darstellung veranschaulichen, dass eine solche Präsentation, z.B. auf dem Bildschirm seines Smartphones oder Tablets, es dem Nutzer ermöglicht, das erwartete Färbeergebnis zu beurteilen.

Alternativ oder zusätzlich kann das erwartete Färbeergebnis, wie oben beschrieben, dem Nutzer als ein Foto präsentiert werden, welches ihn darstellt und wobei der Bereich, in dem seine Haare abgebildet sind, auf bekannte Weise ermittelt und mit der neuen Haarfarbe eingefärbt wird.

In verschiedenen Ausführungsbeispielen können andere/weitere Nutzereingaben, z.B. ein Beantworten des Fragebogens, vom Nutzer beispielsweise mittels einer Tastatur, einer Maus und/oder akustisch vorgenommen werden. Für die akustische Eingabe kann die elektronische Datenverarbeitungsvorrichtung mit einer Spracherkennungssoftware ausgerüstet sein.

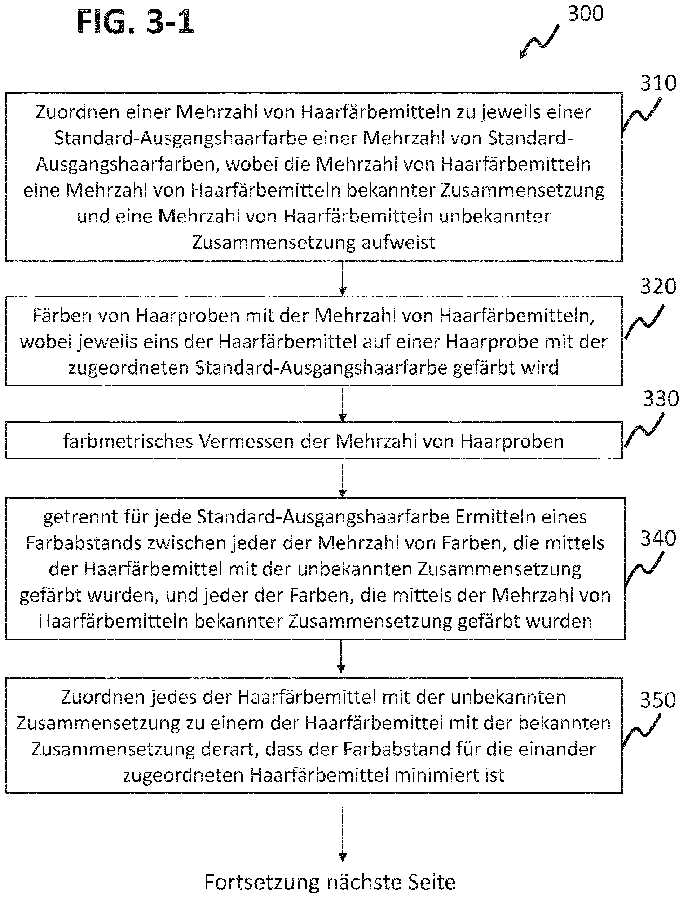

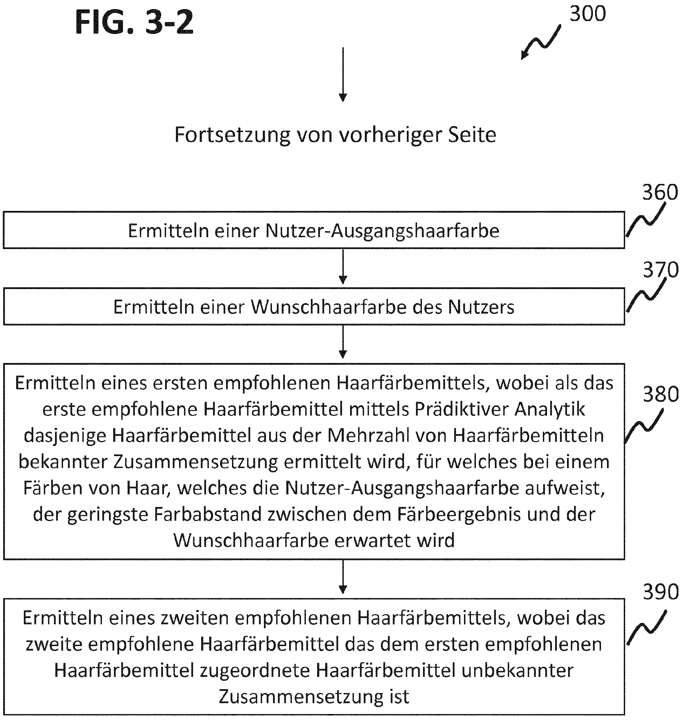

FIG. 3 zeigt ein Ablaufdiagramm 300 eines Verfahrens zum Ermitteln einer herstellerübergreifenden Haarfärbemittelempfehlung gemäß verschiedenen Ausführungsbeispielen.

Das Verfahren kann aufweisen ein Zuordnen einer Mehrzahl von Haarfärbemitteln zu jeweils einer Standard-Ausgangshaarfarbe einer Mehrzahl von Standard-Ausgangshaarfarben, wobei die Mehrzahl von Haarfärbemitteln eine Mehrzahl von Haarfärbemitteln bekannter Zusammensetzung und eine Mehrzahl von Haarfärbemitteln unbekannter Zusammensetzung aufweist (in 310), ein Färben von Haarproben mit der Mehrzahl von Haarfärbemitteln, wobei jeweils eins der Haarfärbemittel auf einer Haarprobe mit der zugeordneten Standard-Ausgangshaarfarbe gefärbt wird (in 320), ein farbmetrisches Vermessen der Mehrzahl von Haarproben (in 330), getrennt für jede Standard-Ausgangshaarfarbe ein Ermitteln eines Farbabstands zwischen jeder der Mehrzahl von Farben, die mittels der Haarfärbemittel mit der unbekannten Zusammensetzung gefärbt wurden, und jeder der Farben, die mittels der Mehrzahl von Haarfärbemitteln bekannter Zusammensetzung gefärbt wurden (in 340), ein Zuordnen jedes der Haarfärbemittel mit der unbekannten Zusammensetzung zu einem der Haarfärbemittel mit der bekannten Zusammensetzung derart, dass der Farbabstand für die einander zugeordneten Haarfärbemittel minimiert ist (in 350), ein Ermitteln einer Nutzer-Ausgangshaarfarbe (in 360), ein Ermitteln einer Wunschhaarfarbe des Nutzers (in 370), ein Ermitteln eines ersten empfohlenen Haarfärbemittels, wobei als das erste empfohlene Haarfärbemittel mittels Prädiktiver Analytik dasjenige Haarfärbemittel aus der Mehrzahl von Haarfärbemitteln bekannter Zusammensetzung ermittelt wird, für welches bei einem Färben von Haar, welches die Nutzer-Ausgangshaarfarbe aufweist, der geringste Farbabstand zwischen dem Färbeergebnis und der Wunschhaarfarbe erwartet wird (in 380), und ein Ermitteln eines zweiten empfohlenen Haarfärbemittels, wobei das zweite empfohlene Haarfärbemittel das dem ersten empfohlenen Haarfärbemittel zugeordnete Haarfärbemittel unbekannter Zusammensetzung ist (in 390).

Weitere vorteilhafte Ausgestaltungen des Verfahrens ergeben sich aus der Beschreibung der Vorrichtung und umgekehrt.

**Patentansprüche**

1.   Verfahren zum Ermitteln einer herstellerübergreifenden Haarfärbemittelempfehlung, aufweisend:

   • Zuordnen einer Mehrzahl von Haarfärbemitteln zu jeweils einer Standard-Ausgangshaarfarbe einer Mehrzahl von Standard-Ausgangshaarfarben, wobei die Mehrzahl von Haarfärbemitteln eine Mehrzahl von Haarfärbemitteln bekannter Zusammensetzung und eine Mehrzahl von Haarfärbemitteln unbekannter Zusammensetzung aufweist;
   • Färben von Haarproben mit der Mehrzahl von Haarfärbemitteln, wobei jeweils eins der Haarfärbemittel auf einer Haarprobe mit der zugeordneten Standard-Ausgangshaarfarbe gefärbt wird;
   • farbmetrisches Vermessen der Mehrzahl von Haarproben;
   • getrennt für jede Standard-Ausgangshaarfarbe Ermitteln eines Farbabstands zwischen jeder der Mehrzahl von Farben der Haarproben, die mittels der Haarfärbemittel mit der unbekannten Zusammensetzung gefärbt wurden, und jeder der Farben der Haarproben, die mittels der Mehrzahl von Haarfärbemitteln bekannter Zusammensetzung gefärbt wurden;
   • Zuordnen jedes der Haarfärbemittel mit der unbekannten Zusammensetzung zu einem der Haarfärbemittel mit der bekannten Zusammensetzung derart, dass der Farbabstand für die einander zugeordneten Haarfärbemittel minimiert ist;
   • Ermitteln einer Nutzer-Ausgangshaarfarbe;
   • Ermitteln einer Wunschhaarfarbe des Nutzers;
   • Ermitteln eines ersten empfohlenen Haarfärbemittels, wobei als das erste empfohlene Haarfärbemittel mittels Prädiktiver Analytik dasjenige Haarfärbemittel aus der Mehrzahl von Haarfärbemitteln bekannter Zusammensetzung ermittelt wird, für welches bei einem Färben von Haar, welches die Nutzer-Ausgangshaarfarbe aufweist, der geringste Farbabstand zwischen dem Färbeergebnis und der Wunschhaarfarbe erwartet wird; und
   • Ermitteln eines zweiten empfohlenen Haarfärbemittels, wobei das zweite empfohlene Haarfärbemittel das dem ersten empfohlenen Haarfärbemittel zugeordnete Haarfärbemittel unbekannter Zusammensetzung ist.

2.   Verfahren gemäß Anspruch 1, wobei die jeweilige gemessene Farbe in einem Farbraum parametrisiert wird.

3.   Verfahren gemäß Anspruch 2, wobei der Farbraum der L*a*b*-Farbraum ist.

4.   Verfahren gemäß einem der Ansprüche 1 bis 3, wobei eine Anzahl der Standard-Ausgangshaarfarben 2, 3, 4 oder 5 beträgt.

5.   Verfahren gemäß einem der Ansprüche 1 bis 4, wobei das Ermitteln der Nutzer-Ausgangshaarfarbe mittels eines Haarfarben-Messgeräts erfolgt.

6.   Verfahren gemäß einem der Ansprüche 1 bis 4, wobei das Ermitteln der Nutzer-Ausgangshaarfarbe mittels Auswählens aus einer Mehrzahl bereitgestellter Ausgangshaarfarben erfolgt.

7.   Verfahren gemäß einem der Ansprüche 1 bis 6, ferner aufweisend:
Darstellen eines erwarteten Färbeergebnisses als Abbildung einer eingefärbten Haartresse oder als digitales Foto des Nutzers, in welchem ein Haarbereich als mit dem erwarteten Färbeergebnis eingefärbter Haarbereich dargestellt ist.

8.   Verfahren gemäß einem der Ansprüche 1 bis 7, wobei die zugeordnete Standard-Ausgangshaarfarbe basierend auf einem für das jeweilige Haarfärbemittel angegebenen mittleren Anwendungsbereich zugeordnet wird.

9. Verfahren gemäß einem der Ansprüche 1 bis 8, wobei das Zuordnen jedes der Haarfärbemittel mit der unbekannten Zusammensetzung zu einem der Haarfärbemittel mit der bekannten Zusammensetzung derart erfolgt, dass die Zuordnung nur für diejenigen Haarfärbemittel erfolgt, die hinsichtlich eines weiteren vorbestimmten Merkmals übereinstimmen.

10. Datenverarbeitungsvorrichtung zum Ausführen eines Ermittelns einer herstellerübergreifenden Haarfärbemittelempfehlung, wobei die Datenverarbeitungsvorrichtung eingerichtet ist, die folgenden Schritte des Verfahrens gemäß einem der Ansprüche 1 bis 9 auszuführen:

  • Zuordnen einer Mehrzahl von Haarfärbemitteln zu jeweils einer Standard-Ausgangshaarfarbe einer Mehrzahl von Standard-Ausgangshaarfarben, wobei die Mehrzahl von Haarfärbemitteln eine Mehrzahl von Haarfärbemitteln bekannter Zusammensetzung und eine Mehrzahl von Haarfärbemitteln unbekannter Zusammensetzung aufweist;
  • getrennt für jede Standard-Ausgangshaarfarbe Ermitteln eines Farbabstands zwischen jeder der Mehrzahl von Farben der Haarproben, die mittels der Haarfärbemittel mit der unbekannten Zusammensetzung gefärbt wurden, und jeder der Farben der Haarproben, die mittels der Mehrzahl von Haarfärbemitteln bekannter Zusammensetzung gefärbt wurden, wobei die Farben durch farbmetrisches Vermessen einer Mehrzahl von Haarproben ermittelt wurden, wobei das Färben von Haarproben mit der Mehrzahl von Haarfärbemitteln erfolgt, indem jeweils eins der Haarfärbemittel auf einer Haarprobe mit der zugeordneten Standard-Ausgangshaarfarbe gefärbt wird;
  • Zuordnen jedes der Haarfärbemittel mit der unbekannten Zusammensetzung zu einem der Haarfärbemittel mit der bekannten Zusammensetzung derart, dass der Farbabstand für die einander zugeordneten Haarfärbemittel minimiert ist;
  • Ermitteln einer Nutzer-Ausgangshaarfarbe;
  • Ermitteln einer Wunschhaarfarbe des Nutzers;
  • Ermitteln eines ersten empfohlenen Haarfärbemittels, wobei als das erste empfohlene Haarfärbemittel mittels Prädiktiver Analytik dasjenige Haarfärbemittel aus der Mehrzahl von Haarfärbemitteln bekannter Zusammensetzung ermittelt wird, für welches bei einem Färben von Haar, welches die Nutzer-Ausgangshaarfarbe aufweist, der geringste Farbabstand zwischen dem Färbeergebnis und der Wunschhaarfarbe erwartet wird; und

Ermitteln eines zweiten empfohlenen Haarfärbemittels, wobei das zweite empfohlene Haarfärbemittel das dem ersten empfohlenen Haarfärbemittel zugeordnete Haarfärbemittel unbekannter Zusammensetzung ist.

11. Die Datenverarbeitungsvorrichtung gemäß Anspruch 10, wobei die Datenverarbeitungsvorrichtung eingerichtet ist, Daten mit einer externen Datenverarbeitungsvorrichtung auszutauschen und zumindest das Ermitteln eines ersten empfohlenen Haarfärbemittels mittels der externen Datenverarbeitungsvorrichtung ausführen zu lassen.

12. Die Datenverarbeitungsvorrichtung gemäß Anspruch 10 oder 11, wobei die Datenverarbeitungsvorrichtung eine tragbare Datenverarbeitungsvorrichtung ist.

13. Die Datenverarbeitungsvorrichtung gemäß einem der Ansprüche 10 bis 12, wobei die Datenverarbeitungsvorrichtung einen berührungsempfindlichen Bildschirm zum Erfassen einer Wunschhaarfarbe und zum Darstellen des erwarteten Färbeergebnisses aufweist.

14. Die Datenverarbeitungsvorrichtung gemäß einem der Ansprüche 10 bis 13, wobei das Verfahren mittels einer App ausgeführt wird.

15. Die Datenverarbeitungsvorrichtung gemäß einem der Ansprüche 10 bis 13, wobei das Verfahren mittels einer Webseite und einer externen Datenverarbeitungsvorrichtung ausgeführt wird.

**Claims**

1. A method for determining a cross-manufacturer hair colorant recommendation, comprising:

  • assigning a plurality of hair colorants to in each case one standard starting hair color of a plurality of standard starting hair colors, wherein the plurality of hair colorants comprises a plurality of hair colorants of known composition and a plurality of hair colorants of unknown composition;
  • coloring hair samples using the plurality of hair colorants, wherein each one of the hair colorants is colored on a hair sample with the assigned standard starting hair color;
  • colorimetrically measuring the plurality of hair samples;

• determining, separately for each standard starting hair color, a color difference between each of the plurality of colors of the hair samples that were colored by means of the hair colorants with the unknown composition, and each of the colors of the hair samples that were colored by means of the plurality of hair colorants of known composition:

• assigning each of the hair colorants with the unknown composition to one of the hair colorants with the known composition such that the color difference for the hair colorants assigned to one another is minimized;

• determining a user starting hair color;

• determining a desired hair color of the user;

• determining a first recommended hair colorant, wherein the hair colorant from the plurality of hair colorants of known composition for which the least color difference between the coloring result and the desired hair color is expected during coloring of hair comprising the user starting hair color is determined as the first recommended hair colorant by means of predictive analytics; and

• determining a second recommended hair colorant, wherein the second recommended hair colorant is the hair colorant of unknown composition assigned to the first recommended hair colorant.

2. The method according to claim 1, wherein the relevant measured color is parameterized in a color space.

3. The method according to claim 2, where the color space is a L*a*b* color space.

4. The method according to one of claims 1 to 3, wherein a number of the standard starting hair colors is 2, 3, 4 or 5.

5. The method according to one of claims 1 to 4, wherein the determination of the user starting hair color is carried out by means of a hair-color measuring device.

6. The method according to one of claims 1 to 4, wherein the determination of the user starting hair color is carried out by selecting from a plurality of provided starting hair colors.

7. The method according to one of claims 1 to 6, further comprising:
displaying an expected coloring result as an image of a colored hair tress or as a digital photo of the user in which a hair region is displayed in the form of a hair region colored with the expected coloring result.

8. The method according to one of claims 1 to 7, wherein the assigned standard starting hair color is assigned based on an average application range specified for the relevant hair colorant.

9. The method according to one of claims 1 to 8, wherein the assignment of each of the hair colorant agents with the unknown composition to one of the hair colorants with the known composition is carried out such that the assignment is carried out only for those hair colorants that correspond with respect to a further predetermined feature.

10. A data processing device for performing a determination of a cross-manufacturer hair colorant recommendation, wherein the data processing device is configured to perform the following steps of the method according to one of claims 1 to 9:

• assigning a plurality of hair colorants to in each case one standard starting hair color of a plurality of standard starting hair colors, wherein the plurality of hair colorants comprises a plurality of hair colorants of known composition and a plurality of hair colorants of unknown composition;

• determining, separately for each standard starting hair color, a color difference between each of the plurality of colors of the hair samples that were colored by means of the hair colorants with the unknown composition, and each of the colors of the hair samples that were colored by means of the plurality of hair colorants of known composition, wherein the colors were determined by colorimetrically measuring a plurality of hair samples, wherein the coloring of hair samples by means of the plurality of hair colorants is carried out by one of the hair colorants being colored on a hair sample with the assigned standard starting hair color;

• assigning each of the hair colorants with the unknown composition to one of the hair colorants with the known composition such that the color difference for the hair colorants assigned to one another is minimized;

• determining a user starting hair color;

• determining a desired hair color of the user;

• determining a first recommended hair colorant, wherein the hair colorant from the plurality of hair colorants of known composition for which the least color difference between the coloring result and the desired hair color is expected during coloring of hair comprising the user starting hair color is determined as the first recommended hair colorant by means of predictive analytics; and determining a second recommended hair colorant, wherein the second recommended hair colorant is the hair colorant of unknown composition assigned to the first recommended hair colorant.

**11.** The data processing device according to claim 10, wherein the data processing device is configured to exchange data with an external data processing device and to allow at least the determination of a first recommended hair colorant to be performed by means of the external data processing device.

**12.** The data processing device according to claim 10 or 11,
wherein the data processing device is a portable data processing device.

**13.** The data processing device according to one of claims 10 to 12,
wherein the data processing device has a touch-sensitive screen for detecting a desired hair color and displaying the expected coloring result.

**14.** The data processing device according to one of claims 10 to 13,
wherein the method is performed using an app.

**15.** The data processing device according to one of claims 10 to 13,
wherein the method is performed using a website and an external data processing device.


**Revendications**

**1.** Procédé permettant la détermination d'une recommandation de teinture capillaire indépendante de tout fabricant, présentant :

• l'association d'une pluralité de teintures capillaires à respectivement une couleur de cheveux initiale standard d'une pluralité de couleurs de cheveux initiales standard, la pluralité de teintures capillaires présentant une pluralité de teintures capillaires de composition connue et une pluralité de teintures capillaires de composition inconnue ;
• la coloration d'échantillons de cheveux avec la pluralité de teintures capillaires, un échantillon de cheveux comportant la couleur de cheveux initiale standard associée étant coloré avec respectivement une des teintures capillaires ;
• la mesure colorimétrique de la pluralité d'échantillons de cheveux ;
• la détermination, séparément pour chaque couleur de cheveux initiale standard, d'une différence de couleur entre chacune de la pluralité de couleurs des échantillons de cheveux ayant été colorés au moyen des teintures capillaires de composition inconnue et chacune des couleurs des échantillons de cheveux ayant été colorés au moyen de la pluralité de teintures capillaires de composition connue ;
• l'association de chacune des teintures capillaires de composition inconnue à une des teintures capillaires de composition connue de telle sorte que la différence de couleur pour les teintures capillaires associées l'une avec l'autre est minimisée ;
• la détermination d'une couleur de cheveux initiale de l'utilisateur ;
• la détermination d'une couleur de cheveux souhaitée de l'utilisateur ;
• la détermination d'une première teinture capillaire recommandée, ladite teinture capillaire étant déterminée comme la première teinture capillaire recommandée au moyen d'une analyse prédictive parmi la pluralité de teintures capillaires de composition connue, pour laquelle teinture capillaire la plus petite différence de couleur entre la coloration résultante et la couleur de cheveux souhaitée est attendue lors d'une coloration de cheveux présentant la couleur de cheveux initiale de l'utilisateur ; et
• la détermination d'une seconde teinture capillaire recommandée, la seconde teinture capillaire recommandée étant la teinture capillaire de composition inconnue associée à la première teinture capillaire recommandée.

**2.** Procédé selon la revendication 1,
la couleur mesurée respective étant paramétrée dans un espace colorimétrique.

**3.** Procédé selon la revendication 2,
l'espace colorimétrique étant l'espace colorimétrique L*a*b*.

**4.** Procédé selon l'une des revendications 1 à 3,
un nombre de couleurs de cheveux initiales standard étant 2, 3, 4 ou 5.

**5.** Procédé selon l'une des revendications 1 à 4,
la détermination de la couleur de cheveux initiale de l'utilisateur étant effectuée au moyen d'un appareil de mesure de couleur de cheveux.

**6.** Procédé selon l'une des revendications 1 à 4,
la détermination de la couleur de cheveux initiale de l'utilisateur étant effectuée au moyen de la sélection parmi une pluralité de couleurs de cheveux initiales fournies.

**7.** Procédé selon l'une des revendications 1 à 6, présentant en outre :
la représentation d'une coloration résultante attendue en tant qu'image d'une mèche de cheveux colorée ou en tant que photographie numérique de l'utilisateur, dans laquelle une zone de cheveux est représentée en tant que zone de cheveux colorée avec la coloration résultante attendue.

8. Procédé selon l'une des revendications 1 à 7, la couleur de cheveux initiale standard associée étant associée sur la base d'une zone d'application moyenne indiquée pour la teinture capillaire respective.

9. Procédé selon l'une des revendications 1 à 8, l'association de chacune des teintures capillaires de composition inconnue à une des teintures capillaires de composition connue étant effectuée de telle façon que l'association n'est effectuée que pour les teintures capillaires qui concordent en ce qui concerne une autre caractéristique prédéfinie.

10. Dispositif de traitement de données pour la réalisation d'une détermination d'une recommandation de teinture capillaire indépendante de tout fabricant, le dispositif de traitement de données étant configuré pour exécuter les étapes suivantes du procédé selon l'une des revendications 1 à 9 :

    • association d'une pluralité de teintures capillaires à respectivement une couleur de cheveux initiale standard d'une pluralité de couleurs de cheveux initiales standard, la pluralité de teintures capillaires présentant une pluralité de teintures capillaires de composition connue et une pluralité de teintures capillaires de composition inconnue ;
    • détermination, séparément pour chaque couleur de cheveux initiale standard, d'une différence de couleur entre chacune de la pluralité de couleurs des échantillons de cheveux ayant été colorés au moyen des teintures capillaires de composition inconnue et chacune des couleurs des échantillons de cheveux ayant été colorés au moyen de la pluralité de teintures capillaires de composition connue, les couleurs étant déterminées par la mesure colorimétrique d'une pluralité d'échantillons de cheveux, la coloration d'échantillons de cheveux avec la pluralité de teintures capillaires étant effectuée en colorant un échantillon de cheveux comportant la couleur de cheveux initiale standard associée avec respectivement une des teintures capillaires ;
    • association de chacune des teintures capillaires de composition inconnue à une des teintures capillaires de composition connue de telle sorte que la différence de couleur pour les teintures capillaires associées l'une avec l'autre est minimisée ;
    • la détermination d'une couleur de cheveux initiale de l'utilisateur ;

• détermination d'une couleur de cheveux souhaitée de l'utilisateur ;
• détermination d'une première teinture capillaire recommandée, ladite teinture capillaire étant déterminée comme la première teinture capillaire recommandée au moyen d'une analyse prédictive parmi la pluralité de teintures capillaires de composition connue, pour laquelle teinture capillaire la plus petite différence de couleur entre la coloration résultante et la couleur de cheveux souhaitée est attendue lors d'une coloration de cheveux présentant la couleur de cheveux initiale de l'utilisateur ; et détermination d'une seconde teinture capillaire recommandée, la seconde teinture capillaire recommandée étant la teinture capillaire de composition inconnue associée à la première teinture capillaire recommandée.

11. Dispositif de traitement de données selon la revendication 10,
le dispositif de traitement de données étant configuré pour échanger des données avec un dispositif de traitement de données externe et pour faire exécuter au moins la détermination d'une première teinture capillaire recommandée au moyen du dispositif de traitement de données externe.

12. Dispositif de traitement de données selon la revendication 10 ou 11,
le dispositif de traitement de données étant un dispositif de traitement de données portable.

13. Dispositif de traitement de données selon l'une des revendications 10 à 12,
le dispositif de traitement de données présentant un écran tactile pour la saisie d'une couleur de cheveux souhaitée et pour la représentation de la coloration résultante attendue.

14. Dispositif de traitement de données selon l'une des revendications 10 à 13,
le procédé étant exécuté au moyen d'une application.

15. Dispositif de traitement de données selon l'une des revendications 10 à 13,
le procédé étant exécuté au moyen d'une page Web et d'un dispositif de traitement de données externe.

# FIG. 1-1

100-1

B1    B2    B3    } 110

MA F1    MA F2    MA F3

MA F4    MA F5    MA F6    } 120

125

MB F7    MC F8    MD F9

MC F10    MB F11    ME F12    } 130

Fortsetzung nächste Seite

# FIG. 1-2

100-2

Fortsetzung von vorheriger Seite

B1　　　　　　B2　　　　　　B3　　　　　　110

$)+ \boxed{\begin{matrix}MA\\F1\end{matrix}} =$　　$)+ \boxed{\begin{matrix}MA\\F2\end{matrix}} =$　　$)+ \boxed{\begin{matrix}MA\\F3\end{matrix}} =$

$)+ \boxed{\begin{matrix}MA\\F4\end{matrix}} =$　　$)+ \boxed{\begin{matrix}MA\\F5\end{matrix}} =$　　$)+ \boxed{\begin{matrix}MA\\F6\end{matrix}} =$

120

$)+ \boxed{\begin{matrix}MB\\F7\end{matrix}} =$　　$)+ \boxed{\begin{matrix}MC\\F8\end{matrix}} =$　　$)+ \boxed{\begin{matrix}MD\\F9\end{matrix}} =$

$)+ \boxed{\begin{matrix}MC\\F10\end{matrix}} =$　　$)+ \boxed{\begin{matrix}MB\\F11\end{matrix}} =$　　$)+ \boxed{\begin{matrix}ME\\F12\end{matrix}} =$

130

HP-B1　　　HP-CR1　HP-B2　　　HP-CR2　　HP-B3　　　HP-CR3

Fortsetzung nächste Seite

# FIG. 1-3

100-3

Fortsetzung von vorheriger Seite

B1

B2

B3

110

120

ΔE
min

X

X

130

HP-CR1

HP-CR2

HP-CR3

Fortsetzung nächste Seite

# FIG. 1-4

100-4

Fortsetzung von vorheriger Seite

BN  DC

Prädiktive Analytik,
$\Delta E$ min

HP-BN

+ MA F1 =      + MA F2 =      + MA F3 =

+ MA F4 =      + MA F5 =      + MA F6 =

120

MB F7      MC F8      MD F9

MC F10      MB F11      ME F12

130

⇒ MA F2    MC F8

# FIG. 2

200

Ausgangshaarfarbe BN

Wunschhaarfarbe DC

Resultat/Färbeergebnis CR

# FIG. 3-1

300

310

Zuordnen einer Mehrzahl von Haarfärbemitteln zu jeweils einer Standard-Ausgangshaarfarbe einer Mehrzahl von Standard-Ausgangshaarfarben, wobei die Mehrzahl von Haarfärbemitteln eine Mehrzahl von Haarfärbemitteln bekannter Zusammensetzung und eine Mehrzahl von Haarfärbemitteln unbekannter Zusammensetzung aufweist

320

Färben von Haarproben mit der Mehrzahl von Haarfärbemitteln, wobei jeweils eins der Haarfärbemittel auf einer Haarprobe mit der zugeordneten Standard-Ausgangshaarfarbe gefärbt wird

330

farbmetrisches Vermessen der Mehrzahl von Haarproben

340

getrennt für jede Standard-Ausgangshaarfarbe Ermitteln eines Farbabstands zwischen jeder der Mehrzahl von Farben, die mittels der Haarfärbemittel mit der unbekannten Zusammensetzung gefärbt wurden, und jeder der Farben, die mittels der Mehrzahl von Haarfärbemitteln bekannter Zusammensetzung gefärbt wurden

350

Zuordnen jedes der Haarfärbemittel mit der unbekannten Zusammensetzung zu einem der Haarfärbemittel mit der bekannten Zusammensetzung derart, dass der Farbabstand für die einander zugeordneten Haarfärbemittel minimiert ist

Fortsetzung nächste Seite

# FIG. 3-2

300

↓

Fortsetzung von vorheriger Seite

360

| Ermitteln einer Nutzer-Ausgangshaarfarbe |
|---|

370

| Ermitteln einer Wunschhaarfarbe des Nutzers |
|---|

380

| Ermitteln eines ersten empfohlenen Haarfärbemittels, wobei als das erste empfohlene Haarfärbemittel mittels Prädiktiver Analytik dasjenige Haarfärbemittel aus der Mehrzahl von Haarfärbemitteln bekannter Zusammensetzung ermittelt wird, für welches bei einem Färben von Haar, welches die Nutzer-Ausgangshaarfarbe aufweist, der geringste Farbabstand zwischen dem Färbeergebnis und der Wunschhaarfarbe erwartet wird |
|---|

390

| Ermitteln eines zweiten empfohlenen Haarfärbemittels, wobei das zweite empfohlene Haarfärbemittel das dem ersten empfohlenen Haarfärbemittel zugeordnete Haarfärbemittel unbekannter Zusammensetzung ist |
|---|

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2017103050 A1
- DE 102015225459 A1
- US 6330341 B1
- US 2017270679 A1